# EUROPEAN PATENT SPECIFICATION

(11) **EP 3 407 469 B1**
(45) Date of publication and mention of the grant of the patent: **04.03.2020**
(21) Application number: 17741571.8
(22) Date of filing: 20.01.2017
(51) Int. Cl.: H02K 1/16, H02K 1/02, H02K 11/21, H02K 1/27, H02K 11/215

(54) **DYNAMO-ELECTRIC MACHINE**
DYNAMO-ELEKTRISCHE MASCHINE
MACHINE DYNAMO-ÉLECTRIQUE

(30) Priority: 22.01.2016 JP 2016011001
(43) Date of publication of application: 28.11.2018
(73) Proprietor: Yamaha Hatsudoki Kabushiki Kaisha, Iwata-shi, Shizuoka 438-8501 (JP)
(72) Inventor: KOBAYASHI, Takayuki, Iwata-shi Shizuoka 438-8501 (JP)
(74) Representative: Stöckeler, Ferdinand
(86) International application number: PCT/JP2017/002022
(87) International publication number: WO 2017/126694

(56) References cited:
- EP-A1- 1 003 268
- WO-A1-2013/147157
- DE-A1-102015 201 160
- JP-A- 2003 319 631
- JP-A- 2007 181 314
- JP-A- 2009 077 515

## Description

### TECHNICAL FIELD

The present teaching relates to a dynamo-electric machine including a stator.

### BACKGROUND ART

A motor as a dynamo-electric machine has been used to date in order to drive equipment. Examples of known motors include a motor including a stator having a stator core and a stator coil and a rotor having a rotor core and a field magnet. Some motors having such a configuration are provided with a device for detecting information on rotation of the rotor (e.g., information on the number of rotations and a rotation position).

For example, Patent Document 1 discloses a motor including a stator having an iron core (stator core) and a winding (stator coil), a rotor having a main magnetic pole part for a field, a magnetic pole part for detection, and a holding part for holding these magnetic poles, and a magnetic sensor. The detection magnetic pole part has a ring shape and is magnetized in such a manner that north poles and south poles are alternately arranged in a circumferential direction. The detection magnetic pole part is magnetized in such a manner that magnetic fluxes flowing into the magnetic sensor occur at each magnetic pole.

In the motor of Patent Document 1 having the configuration described above, the magnetic fluxes generated at the magnetic pole of the detection magnetic pole part are detected by the magnetic sensor. In this manner, the rotation position of the rotor can be detected.

### CITATION LIST

### PATENT DOCUMENT

Patent Document 1: Japanese Patent Application Publication No. H11-299207

JP 2003 319631 A discloses a brushless motor equipped with a rotor having a rotary shaft, a rotor core where the rotary shaft is inserted, and a magnet arranged around the rotor core. A stator is provided around the rotor, and a position sensor detects the rotational position of the rotor by a magnetic change. The rotor has a sensor space formed between the rotary shaft and the inside periphery of the magnet, and the position sensor is arranged in the sensor space.

WO 2013/147157 A1 teaches a rotating electrical machine using a pressed powder core. A radial gap-type inner rotor-type or outer rotor-type rotating electrical machine is provided with a stator having radial winding poles, and a rotor. The stator is a polar anisotropic pressed powder core subjected to magnetic field orientation such that the radial winding poles serve as poles and subjected to compression molding.

### SUMMARY OF INVENTION

### TECHNICAL PROBLEM

In the configuration of the motor of Patent Document 1, in some cases, magnetic fluxes generated by the main magnetic pole part and currents flowing in the winding can interfere with magnetic fluxes generated by the detection magnetic pole part. In particular, in a case where the motor itself is designed in a small size, the distance from the main magnetic pole part and the winding to the detection magnetic pole part is small, and thus, interference of magnetic fluxes as described above easily occurs. In this case, it is difficult to accurately detect, with the magnetic sensor, magnetic fluxes generated by magnetic poles of the detection magnetic pole part. Consequently, detection accuracy of information on rotation of the rotor decreases.

To avoid interference of magnetic fluxes as described above, it is conceivable to change the shapes of the rotor core and the stator core. In view of this, an inventor of the present teaching tried to change the shapes of a rotor core and a stator core in order to avoid interference of magnetic fluxes as described above in a motor having a configuration similar to that of a brushless motor of Patent Document 1. However, when the shapes of the rotor core and the stator core were changed in order to avoid interference of magnetic fluxes, an output of the dynamo-electric machine decreased. That is, the conventional configuration described above has a difficulty in achieving both suppression of a decrease in detection accuracy of information on rotation of the rotor and an increase in an output of the dynamo-electric machine.

Thus, an object of the present teaching is to obtain a dynamo-electric machine that can achieve both suppression of a decrease in detection accuracy of information on rotation of a rotor and an increase in an output of the dynamo-electric machine.

### SOLUTION TO PROBLEM

In the motor illustrated in FIGS. 1 and 2 of Patent Document 1, the detection magnetic pole part is integrally provided with the main magnetic pole part in an outer peripheral portion of the rotor. On the other hand, in the motor illustrated in FIG. 3 of Patent Document 1, the detection magnetic pole part is disposed inward of the main magnetic pole part in the radial direction of the rotor. That is, in the configuration illustrated in FIG. 3 of Patent Document 1, the main magnetic pole part and the detection magnetic pole part are separated away from each other. Accordingly, the configuration illustrated in FIG. 3 of Patent Document 1 can suppress interference between magnetic fluxes generated by the main magnetic pole part and magnetic fluxes generated by the detection magnetic pole part, as compared to the configuration illustrated in FIGS. 1 and 2 of Patent Document 1.

However, through various investigations, the inventor of the present teaching found that even the configuration of FIG. 3 of Patent Document 1 cannot sufficiently suppress interference of magnetic fluxes as described above in some cases. Thus, the inventor of the present teaching further investigated a configuration that can suppress interference of magnetic fluxes as described above in a dynamo-electric machine having a substantially cylinder-shaped stator core and a rotor core disposed radially inward of the stator core.

The inventor of the present teaching first conducted an investigation for suppressing interference of magnetic fluxes as described above in a dynamo-electric machine having a configuration similar to the configuration illustrated in FIG. 3 of Patent Document 1. Specifically, the inventor conducted an investigation for suppressing interference of magnetic fluxes in a dynamo-electric machine in which a field magnet is disposed in an outer peripheral portion of a rotor core and a magnet for detection is disposed inward of the field magnet in the radial direction of a rotor core.

As a result, it was found that a part of the rotor core disposed between the field magnet and the detection magnet can suppress interference between magnetic fluxes generated by the field magnet and magnetic fluxes generated by the detection magnet. It was found that in this configuration, however, detection accuracy of information on rotation of the rotor core decreases in some cases.

The inventor of the present teaching further conducted investigations to find that it is necessary to reduce an influence of magnetic fluxes generated by a current flowing in the stator coil in order to sufficiently suppress a decrease in detection accuracy of information on rotation of the rotor core.

In view of this, the inventor of the present teaching first conducted an investigation on a dynamo-electric machine in which front end portions of teeth of the stator core are located between the stator coil and the detection magnet. Specifically, the front end portions of the teeth are extended in the axial direction of the stator core to be located between the stator coil and the detection magnet. Consequently, it was found that this configuration can suppress interference between magnetic fluxes generated by a current flowing in the stator coil and magnetic fluxes generated by the detection magnet. Accordingly, the configuration in which the dynamo-electric machine is designed in a small size can also suppress a decrease in detection accuracy of information on rotation of the rotor core.

It was found that the dynamo-electric machine having the configuration described above, however, provides a reduced output in some cases. Investigations for this reason have led to the following factors.

In the case where the front end portions of the teeth are extended in the axial direction of the stator core, magnetic fluxes in the axial direction are generated in the extended portions. Here, in such a dynamo-electric machine, the stator core is typically produced by using a laminated steel plate. When magnetic fluxes in the axial direction are generated in the stator core produced by using the laminated steel plate, an eddy current occurs. That is, in the case where the front end portions of the teeth are extended in the axial direction of the stator core as described above, an eddy current occurs in these extended portions. Accordingly, an iron loss increases. As a result, an output of the dynamo-electric machine decreases.

Based on the foregoing findings, the inventor of the present teaching proceeded an investigation of a configuration that can prevent an increase of an iron loss. In this investigation, the inventor of the present teaching focused on a dust core using a particulate material including particles of a magnetic material. The dust core is a group of a particulate material including particles of a magnetic material. Thus, in the case where the dust core is used as the stator core, even when magnetic fluxes in the axial direction are generated in the stator core, occurrence of an eddy current can be prevented. Accordingly, in the case where the front end portions of the teeth are extended so that the extended portions are located between the stator coil and the detection magnet, an increase in an iron loss can also be prevented. As a result, it is possible to suppress a decrease in detection accuracy of information on rotation of the rotor while suppressing a decrease in output of the dynamo-electric machine.

The inventor of the present teaching focused on characteristics as described above of the dust core using a particulate material including particles of a magnetic material, to reach the following configuration.

A dynamo-electric machine according to an embodiment of the present teaching is a dynamo-electric machine including: a cylinder-shaped stator; a rotor disposed inward of the stator in a radial direction of the stator, the rotor overlapping at least a part of the stator when seen in the radial direction; and a detection unit configured to detect information on rotation of the rotor. The stator includes a stator core including a cylinder-shaped yoke extending in an axial direction and a plurality of teeth disposed on an inner peripheral surface of the yoke, and stator coils wound around the teeth. The rotor includes a rotor core, and a field magnet disposed on an outer peripheral surface of the rotor core. The detection unit includes a detection target portion disposed in the rotor core to rotate integrally with the rotor core, and a detection portion configured to detect a magnetic flux generated by the detection target portion as information on the rotation. The stator core is a dust core using a particulate material including particles of a magnetic material. Suppose the axial direction is a top-bottom direction, the teeth constituted by the particulate material includes a teeth body portion constituted by the particulate material and extending from an inner peripheral surface of the yoke constituted by the particulate material inward in a radial direction of the yoke constituted by the particulate material, the stator coil being wound around the teeth body portion, and a flange portion constituted by the particulate material and extending upward from a front end of the teeth body portion constituted by the particulate material. The rotor core includes a rotor core body portion disposed inward of the teeth in the radial direction of the yoke constituted by the particulate material, and a cylinder portion extending upward from an outer peripheral portion of the rotor core body portion. The detection target portion is disposed in the rotor core in such a manner that the detection target portion is located inward of the cylinder portion in the radial direction of the yoke constituted by the particulate material and is located at an upper side of the rotor core body portion, and a lower end of the detection target portion is located below an upper end of the cylinder portion and an upper end of the flange portion constituted by the particulate material.

The configuration as described above enables at least a part of the cylinder portion to be located between the field magnets and the detection target portion. Consequently, it is possible to suppress interference between magnetic fluxes generated by the field magnets and magnetic fluxes generated by the detection target portion.

A lower end of the detection target portion is located below an upper end of the flange portion. Accordingly, at least a part of the flange portion can be located between the stator coil and the detection target portion. Consequently, it is possible to suppress interference between magnetic fluxes generated by a current flowing in the stator coil and magnetic fluxes generated by the detection target portion.

In this manner, the dynamo-electric machine described above can suppress interference of magnetic fluxes generated by a current flowing in the stator coil and by the field magnets with magnetic fluxes generated by the detection target portion. Thus, in a case where the dynamo-electric machine is designed in a small size, it is also possible to suppress a decrease in detection accuracy of information on rotation of the rotor.

In the dynamo-electric machine described above, the stator core is a dust core using the particulate material including particles of the magnetic material. In the case of using a dust core as the stator core, even when magnetic fluxes in the axial direction are generated in the stator core, occurrence of an eddy current can be prevented. Thus, even when magnetic fluxes in the axial direction are generated in the flange portion, occurrence of an eddy current in the flange portion can be prevented. Accordingly, an increase in an iron loss can be avoided.

As a result, it is possible to achieve both suppression of a decrease in detection accuracy of information on rotation of the rotor and an increase in an output of the dynamo-electric machine.

The upper end of the cylinder portion may be located above an upper end of the teeth body portion. Accordingly, at least a part of the cylinder portion can be located between the stator coil wound around the teeth body portion and the detection target portion. Thus, it is possible to further suppress interference between magnetic fluxes generated by a current flowing in the stator coil and magnetic fluxes generated by the detection target portion.

An upper end of the detection target portion may be located below an upper end of the stator coil. Here, in general, if the rotor includes a detection target portion, the detection target portion projects to one side of the stator in the top-bottom direction (axial direction), and a dimension of the dynamo-electric machine in the axial direction increases. However, in the configuration described above, in the case where the rotor includes the detection target portion, the detection target portion does not project upward from the stator, either. In this manner, it is possible to prevent an increase in a dimension of the dynamo-electric machine in the axial direction.

In the dynamo-electric machine according to the embodiment described above, the teeth include the flange portion extending upward from the front end of the teeth body portion. Accordingly, in the stator core of the dynamo-electric machine according to the embodiment described above, a dimension of the front ends of the teeth in the axial direction is larger than that of a conventional stator core not including the flange portion. Here, in dynamo-electric machine, for example, a dimension of the teeth in the axial direction is set so as to prevent an upper end of the flange portion from significantly projecting upward from an upper end of the stator coil. Accordingly, as compared to a dynamo-electric machine including the conventional stator core, it is possible to increase the dimension of the front ends of the teeth in the axial direction while suppressing an increase in the dimension of the stator in the axial direction. Thus, the use of the field magnet having an appropriate dimension enables an increase in magnetic fluxes generated by the field magnet in the teeth with suppression of an increase in the dimension of the stator in the axial direction, as compared to the motor including the conventional stator core.

An upper end of the field magnet may be located above an upper end of the teeth body portion. Thus, in the radial direction of the stator core, at least a part of the field magnet faces the flange portion. In this case, as compared to the dynamo-electric machine including the conventional stator core, it is possible to increase magnetic fluxes generated by the field magnet in the teeth while suppressing an increase in the dimension of the stator in the axial direction. As a result, an output of the dynamo-electric machine can be increased with suppression of an increase in the dimension of the stator in the axial direction.

The yoke may have a length in the axial direction larger than a length of the teeth body portion in the axial direction. By increasing the dimension of the yoke in the axial direction, a dimension of the yoke in the radial direction can be reduced. As a result, a dimension of the dynamo-electric machine in the radial direction can be reduced.

### ADVANTAGES OF INVENTION

A dynamo-electric machine according to an embodiment of the present teaching enables both suppression of a decrease in detection accuracy of information on rotation of a rotor and an increase in an output of a dynamo-electric machine.

The terminology used herein is for the purpose of describing particular embodiments only and is not intended to be limiting of the invention.

As used herein, the term "at least one" includes any and all combinations of one or more of the associated listed items.

It will be further understood that the terms "including," "comprising" or "having" and variations thereof when used in this specification, specify the presence of stated features, steps, operations, elements, components, and/or their equivalents but do not preclude the presence or addition of one or more other features, steps, operations, elements, components, and/or groups thereof.

It will be further understood that the terms "mounted," "connected," "coupled," and/or their equivalents are used broadly and encompass both direct and indirect mounting, connecting and coupling. Further, "connected" and "coupled" are not restricted to physical or mechanical connections or couplings, and can include electrical connections or couplings, whether direct or indirect.

Unless otherwise defined, all terms (including technical and scientific terms) used herein have the same meaning as commonly understood by one having ordinary skill in the art to which this invention belongs.

It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the invention, it will be understood that a number of techniques and steps are disclosed. Each of these has individual benefit and each can also be used in conjunction with one or more, or in some cases all, of the other disclosed techniques as long as covered by the claims.

Accordingly, for the sake of clarity, this description will refrain from repeating every possible combination of the individual steps in an unnecessary fashion. Nevertheless, the specification and claims should be read with the understanding that such combinations are entirely within the scope of the invention as covered by the claims.

A new dynamo-electric machine including a rotor and a stator that is a dust core using a particulate material including particles of a magnetic material is discussed herein.

In the following description, for purposes of explanation, numerous specific details are set forth in order to provide a thorough understanding of the present invention. It will be evident, however, to one skilled in the art that the present invention may be practiced without these specific details as long as covered by the claims.

The present disclosure is to be considered as an exemplification of the invention, and is not intended to limit the invention to the specific embodiments illustrated by the figures or description below.

In this specification, a cylinder includes not only a cylinder whose outer shape in a cross section perpendicular to an axis is a complete circle, but also a cylinder whose outer shape in the cross section is an oval. In the cross section, the shape of a through hole extending in an axial direction includes not only a complete circle but also an oval.

In this specification, the axial direction refers to a direction along the axis of a stator, that is, an axial direction of a stator 2. In this specification, a radial direction refers to a radial direction of a cylinder-shaped stator.

In this specification, the axial direction is defined as a top-bottom direction for description. In the following description, one end toward one direction along the axis (or one side in the axial direction, where "one" refers to a fixed side in the axial direction; the same hereinafter) is defined as an upper end (or above or upward) and the other end (or the other side in the axial direction, where "the other" refers to a fixed side in the axial direction opposite to the "one"; the same hereinafter) is defined as a lower end (or below or downward), but the present teaching is not limited to this example, and one end toward the one direction along the axis (or one side in the axial direction) may be defined as a lower end (or below or downward), and the other end toward the other direction along the axis (or the other side in the axial direction) may be defined as an upper end (or above or upward). The axial direction may be a direction except the top-bottom direction.

### BRIEF DESCRIPTION OF DRAWINGS

[FIG. 1] A perspective view illustrating an overall configuration of a motor according to an embodiment of the present teaching.
[FIG. 2] A view of the motor when seen from an axial direction of a stator.
[FIG. 3] An end view taken along line III-III in FIG. 2.
[FIG. 4] A view of a motor according to another embodiment corresponding to FIG. 3.
[FIG. 5] A perspective view illustrating another example of a detection unit.
[FIG. 6] A view of a motor according to another embodiment corresponding to FIG. 3.

### DESCRIPTION OF EMBODIMENTS

An embodiment of the present application will be described hereinafter with reference to the drawings. Dimensions of components in the drawings do not strictly represent actual dimensions of the components and dimensional proportions of the components.

### <Overall Configuration of Motor>

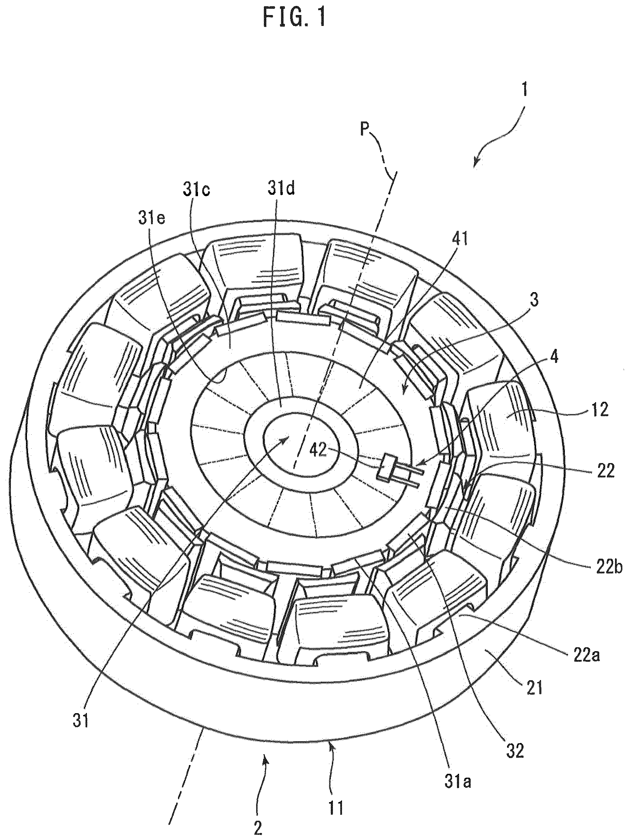

FIG. 1 is a perspective view illustrating an overall configuration of a motor 1 (dynamo-electric machine) according to an embodiment of the present teaching. With reference to FIG. 1, the motor 1 includes a cylinder-shaped stator 2, a cylinder-shaped rotor 3 disposed inward of the stator 2 and having its rotation center coincide with an axis P of the stator 2, and a detection unit 4 for detecting information on rotation of the rotor 3 (e.g., information on the number of rotations or information on the rotation position). The motor 1 is formed in a cylinder shape as a whole. The motor 1 is, for example, used as a motor for assisting a pedaling force of a power-assisted bicycle. The motor 1 is, for example, a brushless motor.

In FIG. 1, character P represents an axis extending in a cylinder axis direction of the stator 2. In the following description, an axial direction refers to an axial direction of the stator 2. In this embodiment, the axial direction of the stator 2 coincides with axial directions of the rotor 3, and a stator core 11, a yoke 21, and a rotor core 31 described later. In the following description, suppose the axial direction is a top-bottom direction, one end toward one direction along the axis (or one side in the axial direction) is also referred to as an upper end (or above or upward), and the other end toward the other direction along the axis (or the other side in the axial direction) is also referred to as a lower end (or below or downward).

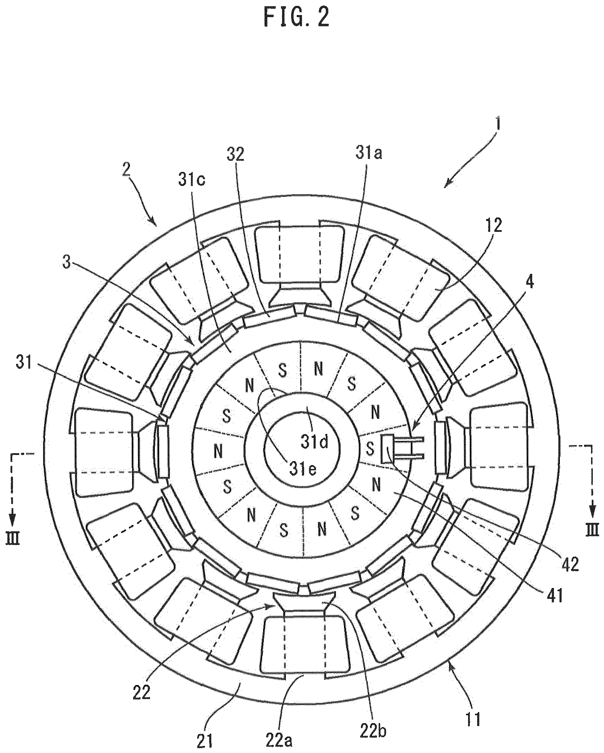

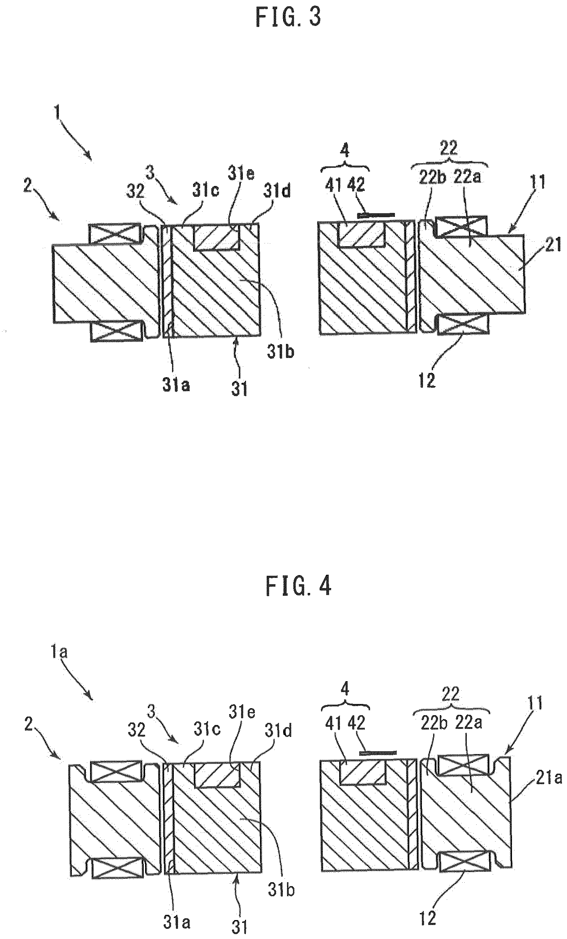

FIG. 2 is a view of the motor 1 seen in the axial direction. FIG. 3 is an end view taken along line III-III in FIG. 2. With reference to FIGS. 1 through 3, the stator 2 includes the stator core 11 having a cylinder shape and stator coils 12 wound around the stator core 11. The stator core 11 is a dust core of a particulate material including particles of a magnetic material. That is, the stator core 11 is integrally formed by using a mold and compacting the particulate material under a predetermined pressure.

The stator core 11 includes the yoke 21 and a plurality of teeth 22. The yoke 21 and the teeth 22 are constituted by the particulate material. In this embodiment, the stator core 11 includes 12 teeth 22. The yoke 21 is formed in a cylinder shape. Each of the teeth 22 extends inward from the inner peripheral surface of the yoke 21. The plurality of teeth 22 are arranged at regular intervals in the circumferential direction on the inner peripheral surface of the yoke 21 when seen in the axial direction.

The teeth 22 include teeth body portions 22a extending inward from the inner peripheral surface of the yoke 21 and flange portions 22b disposed at front ends of the teeth body portions 22a. The teeth body portions 22a and the flange portions 22b are constituted by the particulate material.

In this embodiment, a dimension of the yoke 21 in the axial direction is equal to a dimension of the teeth body portions 22a in the axial direction. The direction in which the teeth body portions 22a extend coincides with the radial direction of the stator core 11 (yoke 21).

With reference to FIG. 2, in this embodiment, the flange portions 22b extend from the front ends of the teeth body portions 22a in the circumferential direction of the stator core 11 (yoke 21). With reference to FIG. 3, the flange portions 22b extend from the front ends of the teeth body portions 22a in the one side in the axial direction (upward) and the other side in the axial direction (downward). That is, in this embodiment, a dimension of the flange portions 22b in a width direction (a dimension in the circumferential direction when the stator 2 is seen in the axial direction) and a dimension of the flange portions 22b in the axial direction are respectively larger than a dimension of the teeth body portions 22a in the width direction and a dimension of the teeth body portions 22a in the axial direction.

The teeth body portions 22a are portions around which the stator coils 12 are wound. The teeth body portions 22a are portions through which magnetic fluxes generated inward from the stator coils 12 when a current is caused to flow in the stator coils 12 pass.

The flange portions 22b are portions projecting from the front ends of the teeth body portions 22a in the axial direction and the circumferential direction. As will be described later, the flange portions 22b are portions located between the stator coils 12 and a detection target portion 41 and used for suppressing interference between magnetic fluxes generated by a current flowing in the stator coils 12 and magnetic fluxes generated by the detection target portion 41.

With reference to FIGS. 1 through 3, the rotor 3 has a cylinder shape, and is disposed in the stator 2 in such a manner that a rotation center of the rotor 3 coincides with the axis P of the stator 2. Although not specifically shown, the rotor 3 is fixed to the rotational shaft with the rotational shaft penetrating the rotor 3 so that the rotor 3 can rotate together with the rotational shaft. The rotor 3 is disposed to overlap with at least a part of the stator 2 when seen in the radial direction.

The rotor 3 includes the rotor core 31 and a plurality of field magnets 32. The rotor core 31 is a cylinder-shaped member of a magnetic material. In this embodiment, the rotor core 31 may be constituted by a dust core of a particulate material including particles of the magnetic material, and may be constituted by a flat rolled magnetic steel sheet. A plurality of slots 31a for arranging the plurality of field magnets 32 at regular intervals in the circumferential direction are formed at the regular intervals on the outer peripheral surface of the rotor core 31. Each of the slots 31a is a recess having such a depth that exposes a part of the corresponding field magnet 32 disposed in the slots 31a. The outer peripheral surface of the rotor core 31 is an outer peripheral surface of the rotor core constituted by the magnetic material, and does not include, for example, a resin layer formed on the surface of the magnetic material.

With reference to FIGS. 1 and 2, in this embodiment, 14 slots 31a are formed on the outer peripheral surface of the rotor core 31. As illustrated in FIG. 3, each of the slots 31a is formed across the outer peripheral surface of the rotor core 31 from one end toward one direction along the axis to the other end toward the other direction along the axis.

The field magnets 32 are permanent magnets, and each have a rectangular solid shape. The field magnets 32 are fixed in the slots 31a formed on the outer peripheral surface of the rotor core 31 with parts of the field magnets 32 in the thickness direction being exposed.

With reference to FIGS. 2 and 3, in this embodiment, the rotor core 31 includes a substantially cylinder-shaped rotor core body portion 31b, a cylinder portion 31c extending from the outer peripheral portion of the rotor core body portion 31b in the one side in the axial direction (upward), and a cylinder portion 31d extending from the inner peripheral portion of the rotor core body portion 31b in the one side in axial direction (upward). In this embodiment, the cylinder portion 31c and the cylinder portion 31d form recessed portions 31e on one surface toward the one direction along the axis (upper surface) of the rotor core 31. With reference to FIGS. 1 and 2, the recessed portions 31e are formed in a ring shape in such a manner that the axis P coincides with the rotation center.

The detection target portion 41 described later is fitted in the recessed portions 31e of the rotor core 31. Here, the cylinder portion 31c is a portion that is at least partially located between the field magnets 32 and the detection target portion 41 and thereby suppresses interference between magnetic fluxes generated by the field magnets 32 and magnetic fluxes generated by the detection target portion 41 as described later. The rotor core body portion 31b is a portion of the rotor core 31 except for the cylinder portions 31c and 31d, that is, a portion of the rotor core 31 located at the other side in the axial direction relative to (below) an imaginary plane including the bottom surface of the recessed portions 31e in the rotor core 31. In the example of FIG. 3, the rotor core body portion 31b is a columnar portion in the rotor core 31 except for the cylinder portions 31c and 31d.

The detection unit 4 includes the detection target portion 41 disposed on the rotor core 31 to rotate integrally with the rotor 3, and a detection portion 42 that detects information on rotation of the rotor 3. In this embodiment, the detection target portion 41 is a ringshaped permanent magnet. As the detection target portion 41, a ferrite sintered magnet, for example, can be used. In this embodiment, the detection target portion 41 is fitted in the recessed portions 31e.

With reference to FIG. 2, the detection target portion 41 is magnetized in such a manner that different magnetic poles alternately appear in the circumferential direction on one surface toward the one direction along the axis (upper surface). In this embodiment, a plurality of magnetic poles on the one surface toward the one direction along the axis (upper surface) are arranged individually in association with the plurality of field magnets 32. Specifically, in the radial direction of the rotor 3, the detection target portion 41 is fixed to the rotor core 31 in such a manner that at least a part of the cylinder portion 31c is located between the plurality of field magnets 32 and the plurality of magnetic poles. Thus, in this embodiment, the detection target portion 41 includes magnetic poles in the same number as the number of field magnets 32 on the one surface toward the one direction along the axis (upper surface).

Although not specifically described, the field magnets 32 located radially outside of regions to be north poles in the one surface toward the one direction along the axis (upper surface) of the detection target portion 41 are disposed in such a manner that the radially outer surfaces are south poles and radially inner surfaces are north poles. The field magnets 32 located radially outside of regions to be south poles in the one surface toward the one direction along the axis (upper surface) of the detection target portion 41 are disposed in such a manner that the radially outer surfaces are north poles and radially inner surfaces are south poles. The plurality of field magnets 32 and the detection target portion 41 are disposed in the manner described above so that interference between magnetic fluxes generated by the field magnets 32 and magnetic fluxes generated by the detection target portion 41 can be suppressed. As a result, it is possible to suppress harmful influence of magnetic fluxes generated by the detection target portion 41 on a magnetic circuit of the motor 1.

The detection portion 42 is disposed at one side in the axial direction (upward) relative to the detection target portion 41. Although not specifically shown, the detection portion 42 is attached to a casing housing the motor 1 through an attachment member, for example. The detection portion 42 includes a Hall IC, for example.

As described above, the detection target portion 41 is magnetized in such a manner that different magnetic poles alternately appear in the circumferential direction on one surface toward the one direction along the axis (upper surface). Thus, the direction of magnetic fluxes detected by the detection portion 42 is repeatedly reversed with rotation of the rotor 3. In this embodiment, the detection portion 42 detects such the change of magnetic fluxes described above as information on rotation of the rotor 3. In this embodiment, the detection portion 42 transmits a signal indicating the detected information to an unillustrated computation device. Based on the signal transmitted from the detection portion 42, the computation device detects the number of rotations and the rotation position, for example, of the rotor 3. Although FIGS. 1 through 3 illustrate one detection portion 42, the detection unit 4 may include a plurality of detection portions 42.

A positional relationship among components of the motor 1 will now be more specifically described.

With reference to FIG. 3, in this embodiment, the detection target portion 41 is located inside the cylinder portion 31c in the radial direction of the yoke 21, and is located at one side in the axial direction relative to (above) the rotor core body portion 31b in the axial direction. One end toward the one direction along the axis (upper end) of the detection target portion 41 is located at the other side in the axial direction relative to (below) one ends toward the one direction along the axis (upper ends) of the stator coils 12.

One end toward the one direction along the axis (upper end) of the cylinder portion 31c and one ends toward the one direction along the axis (upper ends) of the flange portions 22b are located at one side in the axial direction relative to (above) the other end toward the other direction along the axis (lower end) of the detection target portion 41. That is, the other end toward the other direction along the axis (lower end) of the detection target portion 41 is located at the other side in the axial direction relative to (below) the one end (upper end) of the cylinder portion 31c and the one ends toward the one direction along the axis (upper ends) of the flange portions 22b. The one end toward the one direction along the axis (upper end) of the cylinder portion 31c is located at one side in the axial direction relative to (above) one ends toward the one direction along the axis (upper ends) of the teeth body portions 22a. In addition, one ends toward the one direction along the axis (upper ends) of the field magnets 32 are located at one side in the axial direction relative to (above) the one ends toward the one direction along the axis (upper ends) of the teeth body portions 22a.

### <Advantages of Embodiment>

In the motor 1 according to this embodiment, the field magnets 32 are disposed on the outer peripheral surface of the rotor core 31. The rotor core 31 includes the rotor core body portion 31b and the cylinder portion 31c extending from an outer peripheral portion of the rotor core body portion 31b in the one side in the axial direction (upward). The detection target portion 41 is disposed inward of the cylinder portion 31c in the radial direction of the rotor core 31 and at one side in the axial direction (upward) relative to the rotor core body portion 31b. In addition, the one end toward the one direction along the axis (upper end) of the cylinder portion 31c is located at one side in the axial direction relative to (above) the other end toward the other direction along the axis (lower end) of the detection target portion 41. That is, the other end toward the other direction along the axis (lower end) of the detection target portion 41 is located at the other side in the axial direction relative to (below) the one end toward the other direction along the axis (upper end) of the cylinder portion 31c.

The configuration as described above enables at least a part of the cylinder portion 31c to be located between the field magnets 32 and the detection target portion 41. Consequently, it is possible to suppress interference between magnetic fluxes generated by the field magnets 32 and magnetic fluxes generated by the detection target portion 41.

The one ends toward the one direction along the axis (upper ends) of the flange portions 22b are located at one side in the axial direction relative to (above) the other end toward the other direction along the axis (lower end) of the detection target portion 41. That is, the other end toward the other direction along the axis (lower end) of the detection target portion 41 is located at the other side in the axial direction relative to (below) the one ends toward the one direction along the axis (upper ends) of the flange portions 22b. Accordingly, at least a part of the flange portions 22b can be located between the stator coils 12 and the detection target portion 41. Consequently, it is possible to suppress interference between magnetic fluxes generated by a current flowing in the stator coils 12 and magnetic fluxes generated by the detection target portion 41.

In this manner, the motor 1 can suppress interference of magnetic fluxes generated by a current flowing in the stator coils 12 and by the field magnets 32 with magnetic fluxes generated by the detection target portion 41. Thus, in a case where the motor 1 is designed in a small size, it is also possible to suppress a decrease in detection accuracy of information on rotation of the rotor 3.

In the motor 1 according to this embodiment, the stator core 11 is a dust core using the particulate material including particles of the magnetic material. In the case of using a dust core as the stator core 11, even when magnetic fluxes in the axial direction are generated in the stator core 11, occurrence of an eddy current can be prevented. Thus, even when magnetic fluxes in the axial direction are generated in the flange portions 22b, occurrence of an eddy current in the flange portions 22b can be prevented. Accordingly, an increase in an iron loss can be avoided.

As a result, it is possible to achieve both suppression of a decrease in detection accuracy of information on rotation of the rotor 3 and an increase in an output of the motor 1.

In the motor 1 according to this embodiment, the one end toward the one direction along the axis (upper end) of the cylinder portion 31c is located at one side in the axial direction relative to (above) the one ends toward the one direction along the axis (upper ends) of the teeth body portions 22a. Accordingly, at least a part of the cylinder portion 31c can be located between the stator coils 12 wound around the teeth body portions 22a and the detection target portion 41. Thus, it is possible to further suppress interference between magnetic fluxes generated by a current flowing in the stator coils 12 and magnetic fluxes generated by the detection target portion 41.

In the motor 1 according to this embodiment, the one end toward the one direction along the axis (upper end) of the detection target portion 41 is located at the other side in the axial direction relative to (below) the one ends toward the other direction along the axis (upper ends) of the stator coils 12. Here, in general, if the rotor includes a detection target portion, the detection target portion projects to one side in the axial direction (upward) relative to the stator, and a dimension of the motor in the axial direction increases. However, the motor 1 according to this embodiment having the configuration described above, in the case where the rotor 3 includes the detection target portion 41, the detection target portion 41 does not project to one side in the axial direction (upward) relative to the stator 2, either. In this manner, it is possible to prevent an increase in a dimension of the motor 1 in the axial direction.

In the motor 1 according to this embodiment, as described above, the teeth 22 include the flange portions 22b extending from the front ends of the teeth body portions 22a in one side in axial direction (upward). Accordingly, in the stator core 11 of the motor 1 according to this embodiment, a dimension of the front ends of the teeth 22 in the axial direction is larger than that of a conventional stator core not including the flange portions 22b. Here, in the motor 1 according to this embodiment, for example, a dimension of the teeth 22 in the axial direction is set so as to prevent the one ends toward the one direction along the axis (upper ends) of the flange portions 22b from projecting from the one ends toward the one direction along the axis (upper ends) of the stator coils 12 in one side in axial direction (upward). Accordingly, as compared to a motor including the conventional stator core described above, it is possible to increase the dimension of the front ends of the teeth 22 in the axial direction while suppressing an increase in the dimension of the stator 2 in the axial direction. Thus, the use of the field magnets 32 having appropriate dimensions enables an increase in magnetic fluxes generated by the field magnets 32 in the teeth 22 with suppression of an increase in the dimension of the stator 2 in the axial direction, as compared to the motor including the conventional stator core. In the motor 1 according to this embodiment, the one ends toward the one direction along the axis (upper ends) of the field magnets 32 are located at one side in the axial direction relative to (above) the one ends toward the one direction along the axis (upper ends) of the teeth body portions 22a. Thus, in the radial direction of the stator core 11, at least a part of the field magnets 32 faces the flange portions 22b. In this case, as compared to the motor including the conventional stator core, it is possible to increase magnetic fluxes generated by the field magnets 32 in the teeth 22 while suppressing an increase in the dimension of the stator 2 in the axial direction. As a result, an output of the motor 1 can be increased with suppression of an increase in the dimension of the stator 2 in the axial direction.

### <Other Embodiments>

The embodiment of the present teaching has been described above, but the embodiment is merely an example for carrying out the present teaching. Thus, the present teaching is not limited to the embodiment described above, and the embodiment may be modified as necessary within a range not departing from the gist of the present teaching.

The embodiment described above is directed to the case where the dimension of the yoke 21 in the axial direction is equal to the dimension of the teeth body portions 22a in the axial direction, but the shape of the stator core is not limited to the above example. FIG. 4 is an end view illustrating a motor according to another embodiment. The end view of a motor 1a illustrated in FIG. 4 is an end view of a portion corresponding to a portion taken along line III-III in FIG. 2.

The motor 1a illustrated in FIG. 4 is different from the motor 1 described above in that a yoke 21a is disposed instead of the yoke 21. The length of the yoke 21a in the axial direction is larger than the length of the teeth body portions 22a in the axial direction. Thus, an area of a cross section perpendicular to the circumferential direction of the yoke 21a can be made substantially equal to an area of a cross section perpendicular to the circumferential direction of the yoke 21 with the length of the yoke 21a in the radial direction being smaller than the length of the yoke 21 described above in the radial direction. Thus, in the case where the length of the yoke 21a in the radial direction is smaller than the length of the yoke 21 described above in the radial direction, a magnetic flux density substantially equal to a magnetic flux density generated in the yoke 21 can also be obtained in the yoke 21a. Accordingly, it is possible to reduce a dimension of the motor 1a in the radial direction while suppressing a decrease in an output of the motor 1a.

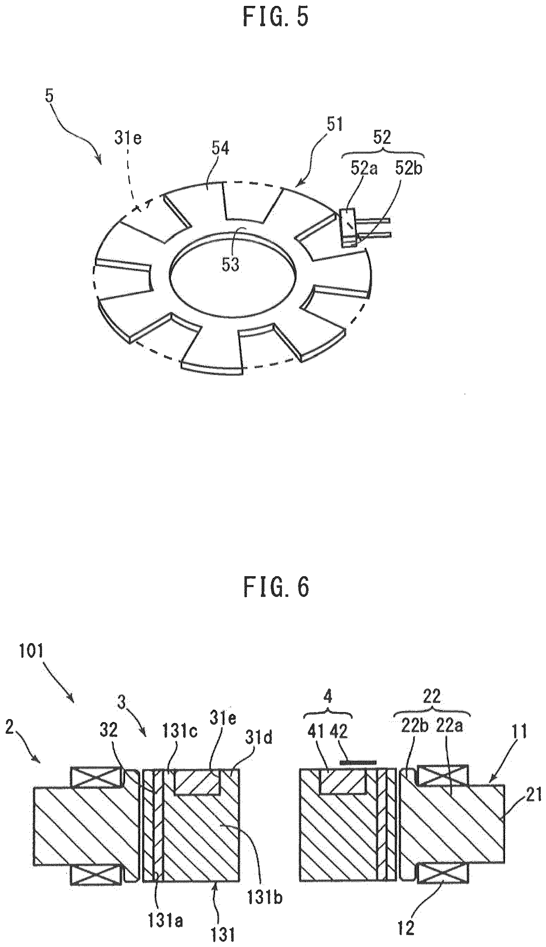

The embodiment described above is directed to the detection unit 4 using a ringshaped magnet as the detection target portion 41, but the configuration of the detection unit is not limited to the above example. FIG. 5 is a perspective view illustrating another example of the detection unit.

With reference to FIG. 5, a detection unit 5 includes a detection target portion 51 and a detection portion 52. The detection target portion 51 includes, for example, a metal plate. In this embodiment, the detection target portion 51 is made of a steel plate. The detection target portion 51 includes a base portion 53 in the shape of a hollow circular plate and a plurality of magnetic flux adjusting portions 54 (hereinafter simply referred to as adjusting portions 54) projecting from the base portion 53 radially outward. The plurality of adjusting portions 54 are arranged at regular intervals in the circumferential direction of the detection target portion 51.

In a case where the detection unit 5 is used instead of the detection unit 4, the detection target portion 51 is fitted in a recessed portions 31e (see FIGS. 1 through 3: the outer rim of the recessed portions 31e is illustrated by broken lines in FIG. 5), instead of the detection target portion 41. Accordingly, the detection target portion 51 rotates together with the rotor 3. Thus, rotation of the rotor 3 causes the plurality of adjusting portions 54 to move forming a circular orbit about the center of the base portion 53 in plane view.

In attaching the detection target portion 51 to the rotor 3, for example, in the radial direction of the rotor 3, the detection target portion 51 is disposed in such a manner that a plurality of field magnets 32 (see FIGS. 1 through 3) face every other one of the plurality of adjusting portions 54. Thus, in this embodiment, the detection target portion 51 includes the adjusting portions 54 in a half number of the field magnets 32.

The detection portion 52 includes a magnet 52a and a detector 52b. The magnet 52a is disposed at one side in the axial direction (above) relative to the circular orbit of the adjusting portions 54. The detector 52b has, for example, a configuration similar to that of the detection portion 42 described above, and includes a Hall IC. The detector 52b is disposed between the circular orbit of the adjusting portions 54 and the magnet 52a in the axial direction. The detector 52b detects magnetic fluxes generated by the detection target portion 51 and the magnet 52a.

In the motor using the detection unit 5, while the rotor 3 rotates, a plurality of adjusting portions 54 intermittently pass at the other side in the axial direction (lower side) relative to the magnet 52a. The detector 52b is located at the other side in the axial direction relative to the magnet 52a. Thus, a magnetic flux density detected by the detector 52b in a case where the adjusting portions 54 are located at the other side in the axial direction (lower side) relative to the magnet 52a is higher than that in a case where the adjusting portions 54 are not located at the other side in the axial direction (lower side) relative to the magnet 52a. Thus, in this embodiment, the detector 52b can detect a change of the magnetic fluxes generated by rotation of the rotor 3 as information on rotation of the rotor 3.

The embodiment described above is directed to the case where the stator core 11 is constituted by one member, but the stator core 11 may be constituted by a plurality of members. For example, the stator core 11 may be divided into a plurality of parts in at least one of the axial direction or the circumferential direction.

The embodiment described above is directed to the case where the rotor core 31 includes the cylinder portion 31d, but the rotor core 31 does not need to include the cylinder portion 31d.

In the embodiment described above, the flange portions 22b extend from the front ends of the teeth body portions 22a in the circumferential direction of the stator core 11 and extend from the front ends in the one side in the axial direction and the other side in the axial direction. However, flange portions only need to extend from the front ends of the teeth body portions 22a in at least the one side in the axial direction (upward).

The embodiment described above is directed to the motor including the 12 teeth 22 and the 14 field magnets 32, but the numbers of the teeth 22 and the field magnets 32 are not limited to the above examples.

In the embodiment described above, the plurality of field magnets 32 are arranged on the outer peripheral surface of the rotor core 31. However, the plurality of field magnets may be disposed radially inward of the outer peripheral surface of the rotor core. Specifically, the rotor may have a configuration as illustrated in FIG. 6. The configuration illustrated in FIG. 6 will be described below in detail. In the following description, components similar to those of the above embodiment are denoted by the same reference characters and will not be described again, and components different from those of the above embodiment will be described.

The rotor core 131 includes a plurality of slots 131a for arranging a plurality of field magnets 32 radially inward of the outer peripheral surface. The slots 131a penetrate the rotor core 131 in the axial direction. Accordingly, field magnets 32 disposed in the slots 131a also penetrate the rotor core 131 in the axial direction. Specifically, the slots 131a and the field magnets 32 penetrate a rotor core body portion 131b and a cylinder portion 131c of the rotor core 131 in the axial direction. That is, in a motor 101 (dynamo-electric machine) illustrated in FIG. 6, the field magnets 32 are disposed inside the rotor core 131.

Although not specifically shown, the plurality of slots 131a are arranged at regular intervals in the circumferential direction of the rotor core 131 in the manner similar to the embodiment described above. Thus, the plurality of field magnets 32 respectively arranged in the plurality of slots 131a are arranged at regular intervals in the rotor core 131 in the circumferential direction in the manner similar to the embodiment described above.

In the configuration illustrated in FIG. 6, a detection target portion 41 is also located radially inward of the cylinder portion 131c, and is also disposed at one side in the axial direction relative to (above) the rotor core body portion 131b. In addition, the other end toward the other direction along the axis (lower end) of the detection target portion 41 is located at the other side in the axial direction relative to (below) one end (upper end) of the cylinder portion 131c and one ends toward the one direction along the axis (upper ends) of the flange portions 22b of the stator core 11.

One end (upper end) of the cylinder portion 131c is located at one side in the axial direction relative to (above) one ends toward the one direction along the axis (upper ends) of the teeth body portions 22a. In addition, one end toward the one direction along the axis (upper end) of the detection target portion 41 is located at the other side in the axial direction relative to (below) the one ends toward the one direction along the axis (upper ends) of the stator coils 12.

That is, the motor 101 illustrated in FIG. 6 has a configuration similar to that of the above embodiment except for arrangement of the field magnets 32 with respect to the rotor core 131.

The embodiment described above is directed to the case where the dynamo-electric machine is the motor 1, but the dynamo-electric machine may include an electric generator. That is, the configuration of the above embodiment may be applied to the electric generator.

### INDUSTRIAL APPLICABILITY

The present teaching enables both suppression of a decrease in detection accuracy of information on rotation of a rotor and an increase in an output of a dynamo-electric machine. Thus, the present teaching is favorably usable in various dynamo-electric machines.

## Claims

1. A dynamo-electric machine (1) comprising:
a cylinder-shaped stator (2);
a rotor (3) disposed inward of the stator (2) in a radial direction of the stator (2), the rotor (3) overlapping at least a part of the stator (2) when seen in the radial direction; and
a detection unit (4, 5) configured to detect information on rotation of the rotor (3), wherein
the stator (2) includes
a stator core (11) including a cylinder-shaped yoke (21, 21a) extending in an axial direction and a plurality of teeth (22) disposed on an inner peripheral surface of the yoke (21, 21a), and
stator coils (12) wound around the teeth (22),
the rotor (3) includes
a rotor core (31, 131), and
a field magnet (32) disposed on an outer peripheral surface of the rotor core (31, 131),
the detection unit (4, 5) includes
a detection target portion (41, 51) disposed in the rotor core (31, 131) to rotate integrally with the rotor core (31, 131), and
a detection portion (42, 52) configured to detect a magnetic flux generated by the detection target portion (41, 51) as information on the rotation,
the stator core (11) is a dust core using a particulate material including particles of a magnetic material,
suppose the axial direction is a top-bottom direction,
the teeth (22) constituted by the particulate material includes
a teeth body portion (22a) constituted by the particulate material and extending from an inner peripheral surface of the yoke (21, 21a) constituted by the particulate material inward in a radial direction of the yoke (21, 21a) constituted by the particulate material, the stator coil (12) being wound around the teeth body portion (22a), and
a flange portion (22b) constituted by the particulate material and extending upward from a front end of the teeth body portion (22a) constituted by the particulate material,
the rotor core (31, 131) includes
a rotor core body portion (31b, 131b) disposed inward of the teeth (22) in the radial direction of the yoke (21, 21a) constituted by the particulate material, and
a cylinder portion (31c, 131c) extending upward from an outer peripheral portion of the rotor core body portion (31b, 131b), and
the detection target portion (41, 51) is disposed in the rotor core (31, 131) in such a manner that the detection target portion (41, 51) is located inward of the cylinder portion (31c, 131c) in the radial direction of the yoke (21, 21a) constituted by the particulate material and is located at an upper side of the rotor core body portion (31b, 131b) in the top-bottom direction, and a lower end of the detection target portion (41, 51) is located below an upper end of the cylinder portion (31c, 131c) and an upper end of the flange portion (22b) constituted by the particulate material in the top-bottom direction.

2. The dynamo-electric machine (1) according to claim 1, wherein the upper end of the cylinder portion (31c, 131c) is located above an upper end of the teeth body portion (22a).

3. The dynamo-electric machine (1) according to claim 1 or 2, wherein an upper end of the detection target portion (41, 51) is located below an upper end of the stator coil (12).

4. The dynamo-electric machine (1) according to any one of claims 1 to 3, wherein an upper end of the field magnet (32) is located above an upper end of the teeth body portion (22a).

5. The dynamo-electric machine (1) according to any one of claims 1 to 4, wherein the yoke (21, 21a) has a length in the axial direction larger than a length of the teeth body portion (22a) in the axial direction.

## Patentansprüche

1. Eine dynamoelektrische Maschine (1), die folgende Merkmale aufweist:
einen zylinderförmigen Stator (2);
einen in einer Radialrichtung des Stators (2) weiter innen als der Stator (2) angeordneten Rotor (3), wobei der Rotor (3) bei Betrachtung in der Radialrichtung zumindest einen Teil des Stators (2) überlappt; und
eine Erfassungseinheit (4, 5), die dazu ausgebildet ist, Informationen über eine Drehung des Rotors (3) zu erfassen, wobei
der Stator (2) folgende Merkmale umfasst:
einen Statorkern (11), der ein sich in einer Axialrichtung erstreckendes zylinderförmiges Joch (21, 21a) und eine Mehrzahl von an einer Innenperipherieoberfläche des Jochs (21, 21a) angeordneten Zähnen (22) umfasst, und
um die Zähne (22) gewickelte Statorspulen (12),
der Rotor (3) folgende Merkmale umfasst:
einen Rotorkern (31, 131) und
einen an einer Außenperipherieoberfläche des Rotorkerns (31, 131) angeordneten Feldmagneten (32),
die Erfassungseinheit (4, 5) folgende Merkmale umfasst:
einen Erfassungszielabschnitt (41, 51), der in dem Rotorkern (31, 131) angeordnet ist, um sich einstückig mit dem Rotorkern (31, 131) zu drehen, und einen Erfassungsabschnitt (42, 52), der dazu ausgebildet ist, einen durch den Erfassungszielabschnitt (41, 51) erzeugten Magnetfluss als Informationen über die Drehung zu erfassen,
der Statorkern (11) ein Massekern ist, der ein Partikelmaterial verwendet, das Partikel eines magnetischen Materials umfasst,
angenommen, die Axialrichtung ist eine Oben-Unten-Richtung,
die durch das Partikelmaterial gebildeten Zähne (22) folgende Merkmale umfassen:
einen Zahnkörperabschnitt (22a), der durch das Partikelmaterial gebildet ist und sich von einer Innenperipherieoberfläche des Jochs (21, 21a), das durch das Partikelmaterial gebildet ist, in einer Radialrichtung des Jochs (21, 21a), das durch das Partikelmaterial gebildet ist, nach innen erstreckt, wobei die Statorspule (12) um den Zahnkörperabschnitt (22a) gewickelt ist, und
einen Flanschabschnitt (22b), der durch das Partikelmaterial gebildet ist und sich von einem vorderen Ende des Zahnkörperabschnitts (22a), der durch das Partikelmaterial gebildet ist, nach oben erstreckt,
der Rotorkern (31, 131) folgende Merkmale umfasst:
einen Rotorkernkörperabschnitt (31b, 131b), der in der Radialrichtung des durch das Partikelmaterial gebildeten Jochs (21, 21a) weiter innen als die Zähne (22) angeordnet ist, und
einen Zylinderabschnitt (31c, 131c), der sich von einem Außenperipherieabschnitt des Rotorkernkörperabschnitts (31b, 131b) aus nach oben erstreckt, und
der Erfassungszielabschnitt (41, 51) derart in dem Rotorkern (31, 131) angeordnet ist, dass sich der Erfassungszielabschnitt (41, 51) in der Radialrichtung des durch das Partikelmaterial gebildeten Jochs (21, 21a) weiter innen als der Zylinderabschnitt (31c, 131c) befindet und sich in der Oben-Unten-Richtung an einer Oberseite des Rotorkernkörperabschnitts (31b, 131b) befindet, und sich ein unteres Ende des Erfassungszielabschnitts (41, 51) in der Oben-Unten-Richtung unterhalb eines oberen Endes des Zylinderabschnitts (31c, 131c) und eines oberen Endes des Flanschabschnitts (22b), der durch das Partikelmaterial gebildet ist, befindet.

2. Die dynamoelektrische Maschine (1) gemäß Anspruch 1, bei der sich das obere Ende des Zylinderabschnitts (31c, 131c) oberhalb eines oberen Endes des Zahnkörperabschnitts (22a) befindet.

3. Die dynamoelektrische Maschine (1) gemäß Anspruch 1 oder 2, bei der sich ein oberes Ende des Erfassungszielabschnitts (41, 51) unterhalb eines oberen Endes der Statorspule (12) befindet.

4. Die dynamoelektrische Maschine (1) gemäß einem der Ansprüche 1 bis 3, bei der sich ein oberes Ende des Feldmagneten (32) oberhalb eines oberen Endes des Zahnkörperabschnitts (22a) befindet.

5. Die dynamoelektrische Maschine (1) gemäß einem der Ansprüche 1 bis 4, bei der das Joch (21, 21a) in der Axialrichtung eine größere Länge aufweist als der Zahnkörperabschnitt (22a) in der Axialrichtung.

## Revendications

1. Machine dynamo-électrique (1), comprenant:
un stator en forme de cylindre (2);
un rotor (3) disposé à l'intérieur du stator (2) dans une direction radiale du stator (2), le rotor (3) venant en chevauchement avec au moins une partie du stator (2), lorsque vu dans la direction radiale; et
une unité de détection (4, 5) configurée pour détecter des informations sur la rotation du rotor (3),
dans laquelle
le stator (2) comporte
un noyau de stator (11) comportant une culasse en forme de cylindre (21, 21a) s'étendant dans une direction axiale et une pluralité de dents (22) disposées sur une surface périphérique intérieure de la culasse (21, 21a), et
des bobines de stator (12) enroulées autour des dents (22), le rotor (3) comporte
un noyau de rotor (31, 131), et
un aimant de champ (32) disposé sur une surface périphérique extérieure du noyau de rotor (31, 131),
l'unité de détection (4, 5) comporte
une partie cible de détection (41, 51) disposée dans le noyau de rotor (31, 131) de manière à tourner de manière solidaire avec le noyau de rotor (31, 131), et
une partie de détection (42, 52) configurée pour détecter un flux magnétique généré par la partie cible de détection (41, 51) comme informations sur la rotation,
le noyau de stator (11) est un noyau de poussières utilisant un matériau particulaire comportant des particules d'un matériau magnétique,
il est supposé que la direction axiale est une direction du haut vers le bas,
les dents (22) constituées par le matériau particulaire comportent
une partie de corps de dents (22a) constituée par le matériau particulaire et s'étendant à partir d'une surface périphérique intérieure de la culasse (21, 21a) constituée par le matériau particulaire vers l'intérieur dans une direction radiale de la culasse (21, 21a) constituée par le matériau particulaire, la bobine de stator (12) étant enroulée autour de la partie de corps de dents (22a), et
une partie de bride (22b) constituée par le matériau particulaire et s'étendant vers le haut à partir d'une extrémité avant de la partie de corps de dents (22a) constituée par le matériau particulaire,
le noyau de rotor (31, 131) comporte
une partie de corps de noyau de rotor (31b, 131b) disposée à l'intérieur des dents (22) dans la direction radiale de la culasse (21, 21a) constituée par le matériau particulaire, et
une partie de cylindre (31c, 131c) s'étendant vers le haut à partir d'une partie périphérique extérieure de la partie de corps de noyau de rotor (31b, 131b), et
la partie cible de détection (41, 51) est disposée dans le noyau de rotor (31, 131) de sorte que la partie cible de détection (41, 51) soit située à l'intérieur de la partie cylindre (31c, 131c) dans la direction radiale de la culasse (21, 21a) constituée par le matériau particulaire et soit située d'un côté supérieur de la partie de corps de noyau de rotor (31b, 131b) dans la direction du haut vers le bas, et une extrémité inférieure de la partie cible de détection (41, 51) est située au-dessous d'une extrémité supérieure de la partie de cylindre (31c, 131c) et d'une extrémité supérieure de la partie de bride (22b) constituée par le matériau particulaire dans la direction du haut vers le bas.

2. Machine dynamo-électrique (1) selon la revendication 1, dans laquelle l'extrémité supérieure de la partie de cylindre (31c, 131c) est située au-dessus d'une extrémité supérieure de la partie de corps de dents (22a).

3. Machine dynamo-électrique (1) selon la revendication 1 ou 2, dans laquelle une extrémité supérieure de la partie cible de détection (41, 51) est située au-dessous d'une extrémité supérieure de la bobine de stator (12).

4. Machine dynamo-électrique (1) selon l'une quelconque des revendications 1 à 3, dans laquelle une extrémité supérieure de l'aimant de champ (32) est située au-dessus d'une extrémité supérieure de la partie de corps de dents (22a).

5. Machine dynamo-électrique (1) selon l'une quelconque des revendications 1 à 4, dans laquelle la culasse (21, 21a) présente une longueur dans la direction axiale supérieure à une longueur de la partie de corps de dents (22a) dans la direction axiale.
